# EUROPEAN PATENT SPECIFICATION

(11) **EP 1 456 097 B1**
(45) Date of publication and mention of the grant of the patent: **11.05.2005**
(21) Application number: 02805286.8
(22) Date of filing: 25.11.2002
(51) Int. Cl.: B65D 81/32, A23D 7/02, A23C 13/14

(54) **MULTICOMPARTMENT DEVICE FOR PREPARING AN EMULSION**
MEHRKAMMERVORRICHTUNG ZUR HERSTELLUNG EINER EMULSION
DISPOSITIF COMPARTIMENT POUR LA PR PARATION D'UNE MULSION

(30) Priority: 21.12.2001 EP 01310851
(43) Date of publication of application: 15.09.2004
(73) Proprietor: UNILEVER N.V., 3013 AL Rotterdam (NL); Unilever Plc, London, Greater London EC4P 4BQ (GB)
(72) Inventor: ECKHARDT, Goetz, Unilever R & D Vlaardingen, NL-3133 AT Vlaardingen (NL); FINLAYSON, Roger M., Unilever R & D Vlaardingen, NL-3133 AT Vlaardingen (NL); FOSTER, Timothy J., Unilever R & D Colworth, Bedfordshire MK44 1LQ (GB); RUSSELL, Alison, Louise, Unilever R & D Colworth, Bedfordshire MK44 1LQ (GB); WILLIAMS, Martin A. K., Unilever R & D Colworth, Bedfordshire MK44 1LQ (GB)
(74) Representative: Van Velzen, Maaike Mathilde
(86) International application number: PCT/EP2002/013169
(87) International publication number: WO 2003/053811

(56) References cited:
- WO-A-01/10228
- US-A- 3 720 523
- US-B1- 6 245 375

## Description

### Field of the invention

The invention relates to a closed multicompartment device which is suitable for the preparation of an oil and water containing emulsion in the pack.

### Background to the invention

Kitchen products that are suitable for use in frying, baking, spreading (on bread, toast or the like) are well known for decades. These products are generally offered to a consumer in the form of a final product in a tub or wrapper.

Such products have the disadvantage that they have limited storage stability, especially leading to products with phase separation upon storage at a temperature of about room temperature (20 to 35 °C). In US-A-4160850, this disadvantage is acknowledged. Hence this document provides a shelf-stable mix suitable for consumer preparation of a spreadable butter substitute. However, the products provided therein require a set of actions which take long, require accurate weighing of the ingredients and also require the use of relatively sophisticated electrical equipment and in many cases recommend storage of the product in a refrigerator to completely stabilize the emulsion. Especially the accurate weighing of the ingredients that are added and the transfer of all of the base composition to a mixing bowl are generally inaccurate actions often leading to undesired end products showing defects due to the wrong mixing ratio between base component and added ingredients.

This problem is addressed in WO-A-01/10228.
This document discloses shelf stable complete food premixes. The mixes are provided in multicompartment packaging comprising a high water activity aqueous component and a low wateractivity component in separate compartments. The components are preferably stored in multicompartment packages having rupturable seals. To prepare the uncooked mix or food or beverage the preparer may combine portions of each compartment or container. Opening of the rupturable seal allows the components contained in the separate compartments to be place in communication with each other for intermixing. The intermixing can be performed by squeezing or kneading the compartments from side to side until the compartments are uniformly mixed.
The device and process according to WO-A-01/10228 are suitable for preparing simple mixtures of materials but were found to be unsuitable for preparing stable oil and water containing emulsion because the preparation of such products generally requires more than only mixing.

Furthermore CN-A-1226501 discloses a beverage bottle having a sealed cup full of specific additives. Before drinking the seal of the small cup is broken and the substances stored therein are dissolved and mixed with water.

However none of the above documents provides a device suitable for preparing a stable oil and water containing emulsion.

Therefore, there is a need for a device for preparing the above emulsions, especially kitchen products, which is easy to handle and does not rely on accurate dosing of a consumer to obtain a good product.

### Summary of the invention

It has now surprisingly been found that this objective is met by a multicompartment device comprising removable separation means whereby removal of the separation means leads to formation of one or more channels with a specified diameter/width after removal of the separation means.

In a first aspect the invention relates to a device comprising volume flexible compartments, suitable for preparing an oil and water emulsion, said device comprising at least two compartments, separated by at least partially removable separation means, wherein one compartment comprises at least an aqueous phase and another compartment comprises at least an oil phase, wherein by at least partial removal of the separation means one or more channels are formed between one compartment and the other, said channels having a diameter of from 1 to 50 mm and wherein the at least partial removal of the separation means enables mixing of the ingredients of the at least two compartments such that within 3 minutes after removing the separation means the final spreadable oil and water emulsion has formed.

In a further aspect the invention relates to a device comprising volume flexible compartments, suitable for preparing an oil and water emulsion, said device comprising at least two compartments, separated by a removable separation means and additional barriers, wherein one compartment comprises at least an aqueous phase and another compartment comprises at least an oil phase wherein the separation means is removable and wherein removing the separation means creates, together with the barriers, one or more channels with a diameter of from 1 to 50. The channel(s) enable mixing and emulsification of the ingredients of the at least two compartments such that within 3 minutes after removing the separation means the final stable oil and water emulsion has formed.

### Detailed description of the invention

All percentages herein are by weight, calculated on total product, unless specifically indicated other wise.

The terms oil and fat are used interchangeably in this specification and claims.

For purpose of the invention a clumped cream according to WO-A-01/10234 is covered by the term emulsion.

The device according to the current invention is suitable for preparing a stable oil and water containing emulsion. This means that the device as such is sufficient for preparing said emulsion and that no further ingredients need to be added. However the addition of further optional ingredients such as flavour or colour agents is possible.

Oil and water emulsions are for example spreadable (skin) creams, margarine type products and certain mayonnaise type products.
One of the advantages of the claimed device is that a consumer does not need any further kitchen utensils or other apparatus for preparing the final product. Also the use of this device is clean and does not give any dirty tools that require cleaning afterwards.

The emulsion prepared using the device is spreadable. In the context of the invention, spreadable is defined by a combination of G' and Stevens value wherein the Stevens value, determined by the method illustrated in the examples, is preferably at least 50 g at 5 °C, more preferred from 50 to 800 g at 5 °C and G', determined by the method illustrated in the examples, preferably ranges from 300 to 5000 Pa at 5 °C under the measuring conditions specified in the examples.
More preferred the Stevens value at 5 °C is from 50 to 500 g when measured with a so called mayonnaise grid to a penetration depth of 20 mm or, for harder products of from 100 to 500 g when measured to a penetration depth of 10 mm with a cylindrical stainless steel probe of 7mm diameter.
The mayonnaise grid is described in WO-A-01/41586.
Examples of known spreadable products include fresh cheese and dairy based spreads. Water continuous spreadable products are often milk based and optionally acidified as disclosed for example in WO-A-97/04660, DE-A-37101052, DE-A-3822082.

Desirably, acceptable spreadable products show a tan delta value from 0.05 to 0.7 at a temperature of 20°C in combination with a strain (critical strain to failure) at tan delta d= 1 of from 0.6 to 2.20 determined by the method according to the examples.

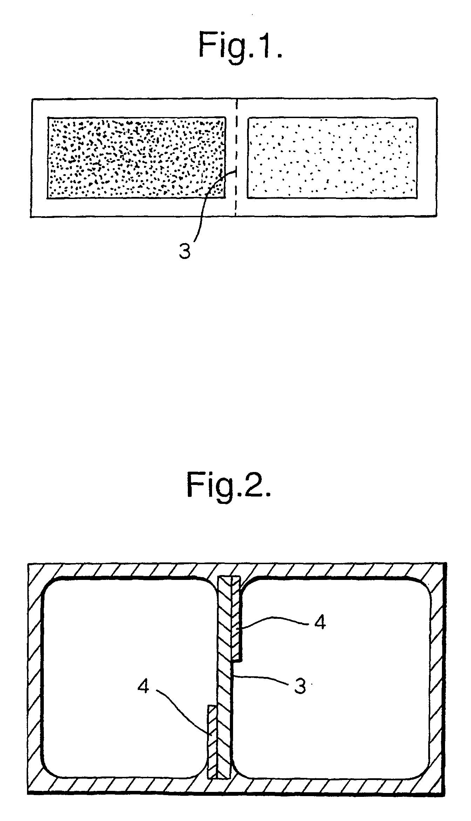

A schematic drawing of one embodiment of the device is given in Figure 1. This figure shows a packaging composition comprising an aqueous phase (1) and a fat phase (2) separated by a removable separation means (3). The dotted line (3) indicates that the separation means is partially removable thus creating channels between compartment (1) and (2) after partial removal.

The device comprises at least 2 compartments separated by removable separation means. The contents of the two compartments can not mix as long as the separation means is still present.

Preferred devices comprise 2 compartments. Optionally one or more further compartments are included. Such further compartment is preferably connected to at least one of the other compartments by removable separation means.

The device comprises a separation means, which is at least partly removable.
Preferably the separation means is removable by manual operation.
An example of this is removal of the separation means by pressure. According to this embodiment, the outer material forming the external circumference of the device can withstand higher pressure than the separation means. Hence by folding the package or by exerting pressure on the separation means in another way, the separation means bursts at least partially.

The separation means can for example be removable by temperature increase. Thus by warming the entire device the external material may be such that it remains intact whereas the separation means are melted or disappear otherwise.

Optionally the device comprises an internal membrane separating the compartments and manually operable means connected to the membrane and extending externally of the device for rupturing or displacing at least part of the membrane to allow mixing of the ingredients in the previously separated compartments.
The manually operable means for rupturing part of the membrane may form an integral part of a sheet forming the membrane, which extension is folded to overlie the membrane so that its free end extends from one side of the device to form a tab. A consumer may pull the tab, thereby removing part of the membrane which is in this embodiment the separation means.

Alternatively the device comprises a cord linked to the separation means whereby part of the cord protrudes externally. A consumer pulling the cord will hence remove at least part of the membrane.

The separation means should be at least partially removable. Preferably the removal is such that only part of the separation means are removed. The device is built such, that by (partial) removal of the separation means, one or more channels are formed between one compartment and the other. These channels enable high flow speed giving turbulence and shear. The subsequent mixing of the phases in these compartments by forcing the phases through the channels, leads to the formation of an emulsion which is more homogeneous and of smaller droplet size of the dispersed phase than for those devices where the entire separation means is removed such as is disclosed in WO-A-01/10228 and US-A-3720523.
Said channels further lead to the formation of a final emulsion with increased stability.

Without such channel formation the rupturing of the separation means may only lead to simple mixing thus creating oil and water emulsions without the desired spreadability and hardness but with a pourable, dressing type consistency. Without wishing to be bound by any theory it is believed that the shear created by mixing in small channels enables the formation of a microstructure allowing formation of a spreadable product with the desired hardness.

Without wishing to be bound by any theory it is believed that the ideal diameter of the channel depends on the viscosity of the components in the compartments and on their amounts.
The diameter of the channel or channels formed by removing part of the separation means is from 1 to 50 mm, preferably from 1 mm to 30 mm, most preferred from 2 mm to 25 mm, even more preferred from 10 mm to 25 mm.

In a preferred embodiment, the device additionally comprises one or more barriers leading to the formation of said one or more channels. Said additional barriers may form the one or more channels with the preferred diameters as disclosed above after the (partial) removal of the separation means. The barriers may for example be placed parallel to the separation means protruding partly into the compartments. In a highly preferred embodiment (presented in figure 2 with barrier numbered (4)), one barrier is placed on one side of the separation means and the other is placed on the other side of the separation means. Alternatively multiple barriers are included in the device such that the (partial) removal of the separation means creates a multiplicity of channels. The preferred diameter of such channels is 1 mm to 50 mm, most preferred 1 to 3 cm.

The device comprises an external material, embracing the external surface, and a separation means, which is internal, namely in between two compartments of the device.
In a preferred embodiment the device is composed of a material for which sealing strength is dependent on pressure or temperature.
For reasons of manufacturing efficiency it is preferred that the external material is of the same composition as the material of which the separation means is composed.

The outer surface of the device may be rigid or flexible as long as the volume of the compartments is flexible such that mixing is possible. Mixing may for example be achieved by forcing the contents of one compartment into the other and back again for example by pumping or squeezing, repeating this cycle several times.

According to one embodiment the device comprises two cylinders separated by a removable separation means and containing movable plungers at the sides opposite the separation means. After at least partial breaking of the separation means the contents of the two cylinders may be moved from one compartment to the other by moving the plungers alternately.

In a most preferred embodiment the device is made of a flexible material such that the contents can be mixed by kneading the device by hand.

Examples of suitable material include low density polyethylene such as Surlin^{tm} , sealing lacquers, aluminum foil, oriented polypropylene, polyestertereftalate, and combinations thereof in laminated form.

Generally the device comprises an opening to take out product or to optionally add further ingredients.

The contents of the compartments of the device are converted into a final emulsion within 3 minutes. It is essential for a consumer that the time for preparation is at most three minutes, preferably at most 2 minutes, more preferred from 10 seconds to 1.5 minutes. Consumers were found to reject products that take longer in their preparation and especially those which need refrigeration before they are ready for use.

It will be appreciated that the composition of the components in the compartments is relevant to the final emulsion composition and to the formation of the final emulsion by manual operation within 3 minutes.

In a more preferred aspect of the invention the device is used for the preparation of an oil in water emulsion having a fat content of from 20 to 80 wt%.
The device of the present invention is exceptionally suitable for the preparation of an oil in water emulsion.

Preferably one compartment comprises an aqueous phase and the other compartment comprises a fat phase. This does not imply that water and fat are always separated in two different compartments. According to an alternative embodiment, the device comprises two compartments each of which comprises a pourable oil in water emulsion which emulsions thicken immediately after mixing to form a spreadable emulsion. Such thickening can for example be obtained by including a gelling agent such as alginate in one of the emulsions and an agent triggering gelation of alginate in the other compartment, e.g. Ca2+ ions.

As indicated above preferably one compartment comprises an aqueous phase and the other an oil phase. The aqueous phase may consist of water only. In such case the oil phase should contain all ingredients necessary to prepare a final emulsion. The aqueous phase preferably comprises caseinate or a caseinate replacer. This caseinate is believed to fulfill a function in both emulsification and viscosity increase.

The oil phase preferably comprises a cold hydrating viscosifying agent or dry fruit homogenate, salt and an acidulate.

Cold hydrating viscosifying agents are defined as those ingredients which will hydrate when added to water which is at a temperature of at most 60°C. The hydration leads to an increase of viscosity of the water in which the ingredient is dispersed. A test to determine suitable cold hydrating viscosifying (CHV) ingredients or systems is described in the examples. This test is further referred to as "RVA method". Those agents or combinations thereof that show a final viscosity after 500 seconds of more than 1700 cP, or that show a final viscosity of from 300 to 600 cP in combination with a rate of hydration defined by the difference of viscosity between time is 0 seconds and time is 100 seconds of more than 1200 cP/minute, are considered suitable cold hydrating viscosifying agents.

Suitable agents can also be found by microscopic examination of water swollen compositions. Suitable compositions for spread-like textures show intact, swollen particles, whereas ones showing irregular, "broken" structures tend to be less suitable.

Compositions that are intended for preparation of a final emulsion that is spreadable preferably comprise a cold hydrating viscosifying agent that gives a final viscosity of at least 1700 cP, preferably 1700 to 4000 cP in combination with a rate of hydration of at least 600, preferably 600 to 4000 cP/minute determined by the RVA- method according to the examples.

Preferably the cold hydrating viscosifying agent is selected from the group comprising cold swelling starch, inulin and gums which give final viscosities greater than 400cP with hydration rates greater than 1500cP/min in the RVA method, or combinations thereof.

Especially preferred cold hydrating viscosifying agents are the so called "modified waxy maize starches".

The following guidelines provide guidance for selection of the cold hydrating viscosifying agent.
For the preparation of spreadable final oil in water emulsions, the use of a cold swelling starch as cold hydrating viscosifying agent is highly preferred. Suitable cold swelling starches are preferably selected from the group comprising Passelli EZ 1911^{tm} Ultratex A^{tm}, Ultratex 1^{tm}, Ultratex 2^{tm}, Ultratex 2000^{tm}, Ultratex 3^{tm}, Ultratex 4^{tm}, Instant Clearjel^{tm}, Ultrasperse M^{tm}, Ultrasperse 5^{tm}, and Ultrasperse A^{tm} and combinations thereof. The mentioned examples are available from National Starch.
Remyline AP^{tm} ex Remy Industries is another suitable cold swelling starch.
Modified potato starch such as Paselli SA 2 ^{tm} from Avebe was found to be unsuitable for use as a cold hydrating viscosifying agent for preparation of final emulsions that are spreadable. Cook -up starches such as Colflo 67^{tm} are less preferred as these will only provide structure after cooking for a considerable amount of time which is often undesired in the process of preparing a final emulsion. In another less preferred embodiment a cook-up starch is included in pre-cooked form. This eliminates the need for further heating during preparation.

The fat phase optionally comprises citric cell wall material in addition to a cold hydrating viscosifying agent or as an alternative thereto. Examples of suitable material are Herbacel AQ Plus citrus fibre^{tm} obtainable from Herbafood ingredients GmbH, or other fibre from orange peels.
Preferred cell wall material has been subjected to a homogenisation treatment.

The amount of cold hydrating viscosifying agent or cell wall material is preferably from 1 to 30 wt%, more preferred from 5 to 25 wt%, most preferred from 5 to 20 wt% on oil phase.

Examples of preferred salts are sodium chloride and potassium chloride. The total presence of salts, when added, is preferably from 0.5 to 8 wt%, more preferred from 1 to 3 wt% on total composition.

The acidulate is preferably selected from the group comprising citric acid, lactic acid, sorbic acid.
The amount of acid is preferably such that the final emulsion has a pH of from about 4 to about 6.

The aqueous phase preferably comprises a polysaccharide. Inclusion of a polysaccharide in the aqueous phase was found to increase the speed of formation of the final emulsion and also to increase the storage stability of the emulsion.
Suitable polysaccharides are preferably selected from the group comprising guar, xanthan, locust bean gum, pectin, lambda carrageenan, fenugreek, konjac mannan, xyloglucan, carboxymethylcellulose, methylcellulose or a combination thereof.
Guar is the most preferred polysaccharide.

The amount of polysaccharide is preferably from 0.2 to 20 wt%, more preferred from 0.5 to 10 wt%, even more preferred from 0.5 to 7 wt% on aqueous phase.

Although for many devices the inclusion of caseinate or a caseinate replacer is sufficient to enhance emulsion formation, it is preferred that the oil phase comprises an emulsifier. This was found to lead to a more stable final emulsion.

The emulsifier is preferably lecithin or sorbitan monopolyoxyethylene (Tween) optionally in combination with a further emulsifier selected from the group comprising monoglycerides, diglycerides, citric acid esters, lactic acid esters.

The amount of emulsifier is preferably from 0.05 o 4 wt% on oil phase.

The aqueous phase preferably comprises caseinate or a caseinate replacer. Without wishing to be bound by any theory, it is believed that caseinate plays a dual role in the final emulsion namely as an emulsifier and as a viscosity enhancer.
Suitable sources for caseinate include but are not limited to skim milk powder, milk protein, milk, denatured whey.
Optionally caseinate may be replaced with an ingredient or combination of ingredients also fulfilling this function. An example of a suitable caseinate replacer is the combination of an emulsifier such as sorbitan monopolyoxyethylene (Tween) and a gum such as guar gum.

The amount of caseinate is preferably from 0.05 to 10 wt%, more preferred from 0.5 to 5 wt% on aqueous phase.

Alternatively the aqueous phase comprises a combination of gelling pectin and surface active pectin or a combination of gelling alginate and surface active alginate or a combination thereof.
These combinations may replace caseinate or can be added in addition to (part of) the caseinate. Without wishing to be bound by any theory it is believed that the surface active counterpart of the alginate or pectin plays a role in emulsion stabilisation by its presence at the oil/water interface. The gelling counterpart of alginate or pectin is believed to thicken the aqueous phase thereby also contributing to aqueous phase stability and reduced syneresis.
Said combination is especially preferred in case the final emulsion is an oil in water emulsion. The oil droplets will then be embedded in an aqueous gel, immobilising said oil droplets and hence preventing coalescence of the oil droplets.

The terms surface active pectin/alginate and gelling pectin/alginate are believed to be well known to a person skilled in the art.
A suitable surface active pectin is acetylated pectin. A suitable surface active alginate is propyleneglycolalginate (PGA). An example of gelling pectin is low methoxy pectin and an example of gelling alginate is manucol^{tm} or manugel^{tm}.

The amount of surface active pectin or alginate is preferably from 0.05 to 2 wt% on aqueous phase.

The amount of gelling pectin or alginate is preferably from 0.01 to 2 wt% on aqueous phase.

The gelation of gelling pectin or alginate is preferably mediated with divalent cations, most preferably Ca²⁺. The introduction of calcium is preferably controlled so that hydration of the polymer and emulsification of oil droplets precedes gel formation. This may for example be achieved by using the pH dependence of the solubility of calcium salts eg. CaCO₃, CaSO₄ and mixtures thereof.

The above mentioned ingredients may be added to the aqueous phase or may be inherently present in the aqueous phase. Suitable aqueous phases therefore include for example milk (comprising caseinate), juice, tea, coffee and the like.

Usage of the device leads to the formation of a spreadable emulsion. Preferably the emulsion is an oil in water emulsion.

The final emulsion formed by the use of the device is preferably characterised by an average droplet size D3,3 of from about 3 to about 100 microns.

The device may have any size but preferably is adapted to usage by a consumer. Therefore in a preferred embodiment, the first compartment comprises from 25 to 250 g of an aqueous phase and the second compartment comprises from 25 to 250 g of an oil phase.

Preferably the device is only used once and then discarded.

The device may be prepared by any suitable method known in the art. In preparing the device general packaging techniques may be used. The oil phase is preferably prepared by mixing all ingredients followed by homogenisation and subsequently filling one compartment. The aqueous phase is preferably subjected to a pasteurisation or sterilisation treatment either separately or in one compartment before the oil phase is added thereto.

The invention is illustrated by the following non-limiting examples.

### Examples

### General

### Determination of G' and Stevens value

Oscillatory shear measurements were performed using a Carrimed CSL500 Rheometer (parallel plate geometry) at a constant-temperature of 5°C. (Stress of 1OPa and Frequency of 1Hz). The sample was loaded onto the rheometer immediately after mixing and values of G' were collected every 30 seconds. The value of G' quoted in Pa is that recorded at a time of 15 minutes after initial shaking.

Stevens value was determined in g by using a Stevens texture analyser (2 mm/sec, 20 mm depth, mayonnaise grid (mesh 7, thread thickness 0.8 mm, mesh width 2.83 mm,). Alternatively for harder products a cylindrical probe was used having a diameter of 7 mm with penetration depth of 10 mm. The Stevens value was determined at room temperature for a product which had been stored at 5 °C for at least 24 hours.

RVA-method to determine suitable cold hydrating viscosifying agents.

### Rapid Visco-Analyser (RVA) - Biopolymer Hydration Test

A model emulsion was prepared containing:

| | |
|---|---|
| Sunflower Oil | 12.5g |
| Lecithin (Bolec MT) | 2.5g |
| "test agent" | 4.0g in case of starch, 1 g in case of a gum. |

These ingredients were mixed for 1 minute, at 25 °C, then water 11.25g (equivalent to 45 Parts in 100g formulation) was added.

This mixture was put straight into RVA machine (manufactured by Newport Scientific Pty Ltd) and mixed for 10 mins at 25°C, 180rpm.
From these data, final viscosity and rate of viscosity development (ie. the maximum gradient between the offset of viscosity increase and the plateau of final viscosity) were derived.

### Small Deformation Rheology of Instant Spreads

Product was placed on rheometer with parallel plate geometry in oscillation mode, 1mm gap, 4cm diameter.
The experiment consisted of a stress sweep from 1 up to ~1000 Pa. The parameters are as follows: frequency 1Hz, temperature 20°C. From the plot of tan delta vs strain, the value of strain where tan delta = 1 is plotted against the initial tan delta value.

### Rapid Visco-Analyser (RVA) - Viscosity Development of Instant Spread from Oil Slurry and water

12.5g of Oil Composition from one compartment was stirred until homogeneous for 10 minutes at 25°C. 12.5g of water phase from the other compartment was added and the two were mixed on the RVA machine (manufactured by Newport Scientific Pty Ltd) for 10 mins at 25°C, at a speed of 180rpm.
From these data the increase in viscosity to a maximum plateau value from 0 to 2 minutes was determined.

### Example 1

A pouch was prepared according to figure 1. The pouch contains two compartments. The material used for external surface and the separations means (3) is a low density polypropylene (Surlin^{tm} from Dupont). One compartment was filled with an oil phase and another compartment was filled with an aqueous phase. The separation means was designed such it will break when pressure is exerted by folding one compartment, leading to formation of 1 channel with a diameter of about 2 cm.

The composition of the oil phase and the aqueous phase is presented in table 1.

**Table 1**

| | wt% ON PHASE | |
|---|---|---|
| | Oil phase | Aqueous phase |
| Bolec M/T ex Unimills Zwijndrecht | 0.7223 | |
| Caseinate | | 1.1086 |
| Ultratex 4^{tm} ex national starch international | 5.8691 | |
| Guar | | 1.3304 |
| Salt | 2.1670 | |
| Tri-Sodium Citrate | 0.5418 | |
| Citric Acid | 0.2257 | |
| Potassium Sorbate | 0.1806 | |
| Sunflower oil | 90.2935 | |
| Water | | 97.5610 |
| Total | 100.0000 | 100.000 0 |

The two phases were made up separately mixing all ingredients of the phase. The temperature of mixing was about 60 °C for the oil phase. The aqueous phase was pasteurised. Next the phases were filled into the separate compartments of the device which were sealed. The device was flexible. By kneading and pressurisation of the separation means, it was broken and a channel with a diameter of about 2 cm was created. The phases were mixed by kneading for about 1.5 minutes after which a spreadable emulsion with Stevens value of 148 g at 5 °C resulted. pH of the final emulsion was 4.9.

### Example 2.

A pouch was prepared with 2 compartments according to example 1. The ingredients composition of the phases is listed in table 2.

**Table 2**

| | wt% on Phase | |
|---|---|---|
| | Oil phase | Aqueous phase |
| Low Methoxy Pectin (LM 12 CG-Z) | 1.832509 | |
| Beet-Pectin | | 0.990099 |
| Calcium Carbonate | 0.366502 | |
| Tri-Sodium Citrate | 0.274876 | |
| Citric Acid | 0.219901 | |
| Sodium Chloride | 1.832509 | |
| Potassium Sorbate | 0.183251 | |
| Ultratex 4^{tm} ex national starch | 3.665017 | |
| Sunflower oil | 91.62544 | |
| Water | | 99.0099 |
| Total | 100 | 100 |

The device was flexible. By kneading and pressurisation of the separation means, it was broken. The phases were mixed by kneading for about 1.5 minutes after which a spreadable emulsion with Stevens value of 55 g at 5 °C resulted. pH of the final emulsion was 4.6.

### Example 3

A pouch was prepared with 2 compartments according to example 1. The ingredients composition of the phases is listed in table 3.

**Table 3**

| Ingredient | wt% on Phase | |
|---|---|---|
| | Oil phase | Aqueous phase |
| Sunflower oil | 89.72633 | |
| DNWP at 10% | | 4.347826 |
| Ultratex 4^{tm} ex national starch | 5.38358 | |
| NaCl | 2.153432 | |
| Tri Sodium Citrate | 0.538358 | |
| Citric Acid | 0.224316 | |
| Potassium - Sorbate | 0.179453 | |
| Water | | 95.65217 |
| Guar | 1.794527 | |
| Total | 100 | 100 |

DNWP is Denatured Whey protein made by heating 10% Bipro 95 (Whey Protein) in de-ionised water at pH 7 at 90°C for 20 mins and cooling.

The device was flexible. By kneading and pressurisation of the separation means, it was broken. The phases were mixed and a spreadable emulsion resulted.

### Example 4

A pouch was prepared with 2 compartments according to example 1. The ingredients composition of the phases is listed in table 4.

**Table 4**

| Ingredients | % ON TOTAL | | wt% on phase | |
|---|---|---|---|---|
| | | | Compartment 1 | Compartment 2 |
| Whipping Cream | | 80.4163 | | 100 |
| Sunflower oil | 14.1911 | | 72.4638 | |
| Ultratex 4^{tm} ex national starch | 3.7843 | | 19.3237 | |
| Sodium Chloride | 1.1353 | | 5.7971 | |
| Potassium Sorbate | 0.0946 | | 0.4831 | |
| Tri-Sodium Citrate | 0.2744 | | 1.4010 | |
| Citric Acid | 0.1041 | | 0.5314 | |
| Total | 19.5837 | 80.4163 | 100.0000 | 100 |
| Total | | 100.0000 | | |

The composition of the whipping cream is for example 4a:
Per 100mL:
1.9g Protein
3.9g Carbohydrate
38.9g Fat
(of which 24.4g Saturates)
The whipping cream was a commercial cream (Safeway) made by standard technology in cream processing.

For example 4b the following whipping cream composition was used:
Per 100mL:
2.4g Protein
3.5g Carbohydrate
29g Fat (of which 25g saturates 1g polyunsaturates)
Ingredients:
   70% Buttermilk
   17% Hydrogenated Vegetable Oil
   11% Vegetable Oil
   Emulsifiers:
      E435 (Polyoxyethylene sorbitan monostearate or Polysorbate 60 or Tween 60)
      E 322 (Lecithin)
   Stabilisers:
      E412 (Guar Gum)
      E410 (Locust Bean Gum)
   Colour: E160a (Beta Carotene)
Also this cream was prepared by standard processing as referred to in EP-A-455288.
The device was flexible. By kneading and pressurisation of the separation means, it was broken. The phases were mixed by kneading for about 1.5 minutes after which a spreadable emulsion with Stevens value of 250 g at room temperature resulted when measured with the grid. The hardness when measured with a cylinder probe was about 250 g at 5 °C for both compositions.

## Claims

1. Device comprising volume flexible compartments, suitable for preparing an oil and water emulsion, said device comprising at least two compartments, separated by at least partially removable separation means (3), wherein one compartment comprises at least an aqueous phase(1) and another compartment comprises at least an oil phase (2), **characterised in that** by at least partial removal of the separation means one or more channels are formed between one compartment and the other, said channels having a diameter of from 1 to 50 mm and **in that** the at least partial removal of the separation means (3) enables mixing of the ingredients of the at least two compartments such that within 3 minutes after removing the separation means the final spreadable oil and water emulsion has formed.

2. Device according to claim 1 which additionally comprises one or more barriers (4) leading to the formation of said one or more channels.

3. Device according to claim 1 or 2 wherein the separation means (3) is arranged such that it can be removed by manual operation.

4. Device according to any of claims 1-3 containing two compartments.

5. Device according to any of claims 1-4 wherein the separation means (3) can be removed by pressure.

6. Device according to any of claims 1-5 comprising an opening to take out product or to optionally add further ingredients.

7. Device according to any of claims 1-6 wherein one compartment comprises an oil phase (2) and another compartment comprises an aqueous phase (1).

8. Device according to claim 7 wherein the aqueous phase (1) comprises caseinate or a caseinate replacer, and the oil phase comprises cold hydrating viscosifying agent or dry fruit homogenate, salt and an acidulate.

9. Device according to any of claims 7-8 wherein the oil phase (2) comprises an emulsifier.

10. Device according to claim 8 wherein the caseinate replacer is a combination of gelling pectin and surface active pectin or a combination of gelling alginate and surface active alginate or a combination thereof.

11. Device according to any of claims 7-10 wherein the mixing of the oil phase (2) and the aqueous phase (1) results in a spreadable oil in water emulsion having an average droplet size D3,3 of from about 3 to about 100 microns.

12. Device according to any of claims 7-11 wherein the first compartment comprises from 25 to 250 g of an aqueous phase (1) and the second compartment comprises from 25 to 250 g of an oil phase (2).

13. Use of a device according to any of claims 1-12 for the preparation of an oil and water containing spreadable emulsion.

## Patentansprüche

1. Vorrichtung, die volumenelastische Kammern umfasst, die zur Herstellung einer Öl-und-Wasser-Emulsion geeignet ist, wobei die Vorrichtung umfasst: wenigstens zwei Kammern, die durch ein wenigstens teilweise entfernbares Trennmittel (3) getrennt sind, wobei wenigstens eine Kammer wenigstens eine wässrige Phase (1) umfasst und eine andere Kammer wenigstens eine Ölphase (2) umfasst, **dadurch gekennzeichnet, dass** durch eine wenigstens teilweise Entfernung des Trennmittels zwischen einer Kammer und der anderen ein Kanal oder mehrere Kanäle gebildet wird/werden, wobei die Kanäle einen Durchmesser von 1 bis 50 mm haben, und dass die wenigstens teilweise Entfernung des Trennmittels (3) ein Mischen der Ingredienzien der wenigstens zwei Kammern derart ermöglicht, dass sich innerhalb von 3 Minuten nach Entfernung des Trennmittels die fertige streichfähige Öl-und-Wasser-Emulsion gebildet hat.

2. Vorrichtung nach Anspruch 1, die außerdem eine Barriere oder mehrere Barrieren (4) umfasst, die zur Bildung des einen Kanals oder der mehreren Kanäle führt/führen.

3. Vorrichtung nach Anspruch 1 oder Anspruch 2, bei der das Trennmittel (3) so angeordnet ist, dass es durch manuelle Bedienung entfernt werden kann.

4. Vorrichtung nach irgendeinem der Ansprüche 1 bis 3, die zwei Kammern enthält.

5. Vorrichtung nach irgendeinem der Ansprüche 1 bis 4, in der das Trennmittel (3) durch Druck entfernt werden kann.

6. Vorrichtung nach irgendeinem der Ansprüche 1 bis 5, die eine Öffnung umfasst, um Produkt zu entnehmen oder um gegebenenfalls weitere Ingredienzien zuzusetzen.

7. Vorrichtung nach irgendeinem der Ansprüche 1 bis 6, wobei eine Kammer eine Ölphase (2) umfasst und eine andere Kammer eine wässrige Phase (1) umfasst.

8. Vorrichtung nach Anspruch 7, wobei die wässrige Phase (1) Caseinat oder einen Caseinat-Ersatzstoff umfasst und die Ölphase ein kalt hydratisierendes, verdickendes Mittel oder trockenes Fruchthomogenat, Salz und ein Säuerungsmittel umfasst.

9. Vorrichtung nach einem der Ansprüche 7 oder 8, wobei die Ölphase (2) einen Emulgator umfasst.

10. Vorrichtung nach Anspruch 8, wobei der Caseinat-Ersatzstoff eine Kombination aus gelierendem Pektin und oberflächenaktivem Pektin oder eine Kombination aus gelierendem Alginat und oberflächenaktivem Alginat oder eine Kombination davon ist.

11. Vorrichtung nach irgendeinem der Ansprüche 7 bis 10, wobei das Mischen der Ölphase (2) und der wässrigen Phase (1) zu einer streichfähigen Öl-in-Wasser-Emulsion führt, die eine durchschnittliche Tröpfchengröße D3,3 von etwa 3 bis etwa 100 µm hat.

12. Vorrichtung nach einem der Ansprüche 7 bis 11, wobei die erste Kammer 25 bis 250 g einer wässrigen Phase (1) umfasst und die zweite Kammer 25 bis 250 g einer Ölphase (2) umfasst.

13. Verwendung einer Vorrichtung nach einem der Ansprüche 1 bis 12 zur Herstellung einer Öl und Wasser enthaltenden streichfähigen Emulsion.

## Revendications

1. Dispositif comprenant des compartiments flexibles en volume, approprié pour préparer une émulsion d'huile et d'eau, ledit dispositif comprenant au moins deux compartiments, séparés par un moyen de séparation au moins partiellement amovible (3), dans lequel un compartiment comprend au moins une phase aqueuse (1) et un autre compartiment comprend au moins une phase huileuse (2), **caractérisé en ce que**, par l'enlèvement au moins partiel du moyen de séparation, un ou plusieurs canaux sont formés entre un compartiment et l'autre, lesdits canaux ayant un diamètre de 1 à 50 mm et **en ce que** l'enlèvement au moins partiel du moyen de séparation (3) permet le mélange des ingrédients des au moins deux compartiments de telle sorte qu'en l'espace de 3 minutes après l'enlèvement du moyen de séparation, l'émulsion d'huile et d'eau finale pouvant être étalée s'est formée.

2. Dispositif selon la revendication 1, qui comprend de plus une ou plusieurs barrières (4) menant à la formation desdits un ou plusieurs canaux.

3. Dispositif selon la revendication 1 ou 2, dans lequel le moyen de séparation (3) est agencé de telle sorte qu'il peut être enlevé par une opération manuelle.

4. Dispositif selon l'une quelconque des revendications 1 à 3, contenant deux compartiments.

5. Dispositif selon l'une quelconque des revendications 1 à 4, dans lequel le moyen de séparation (3) peut être enlevé par pression.

6. Dispositif selon l'une quelconque des revendications 1 à 5, comprenant une ouverture pour prélever un produit ou pour ajouter facultativement des ingrédients supplémentaires.

7. Dispositif selon l'une quelconque des revendications 1 à 6, dans lequel un compartiment comprend une phase huileuse (2) et un autre compartiment comprend une phase aqueuse (1).

8. Dispositif selon la revendication 7, dans lequel la phase aqueuse (1) comprend de la caséinate ou un succédané de caséinate, et la phase huileuse comprend un agent viscosifiant hydratant froid ou un broyat de fruits secs, un sel et un acidulé.

9. Dispositif selon l'une quelconque des revendications 7 à 8, dans lequel la phase huileuse (2) comprend un émulsifiant.

10. Dispositif selon la revendication 8, dans lequel le succédané de caséinate est une combinaison d'une pectine gélifiante et d'une pectine tensioactive ou une combinaison d'un alginate gélifiant et d'un alginate tensioactif ou une combinaison de ceux-ci.

11. Dispositif selon l'une quelconque des revendications 7 à 10, dans lequel le mélange de la phase huileuse (2) et de la phase aqueuse (1) aboutit à une émulsion huile dans l'eau pouvant être étalée ayant une taille moyenne de gouttelette D3,3 d'environ 3 à environ 100 microns.

12. Dispositif selon l'une quelconque des revendications 7 à 11, dans lequel le premier compartiment comprend de 25 à 250 g d'une phase aqueuse (1) et le second compartiment comprend de 25 à 250 g d'une phase huileuse (2).

13. Utilisation d'un dispositif selon l'une quelconque des revendications 1 à 12, pour la préparation d'une émulsion pouvant être étalée contenant de l'huile et de l'eau.
